# EUROPÄISCHE PATENTSCHRIFT

(11) **EP 1 097 330 B1**
(45) Veröffentlichungstag und Bekanntmachung des Hinweises auf die Patenterteilung: **02.04.2003**
(21) Anmeldenummer: 99928002.7
(22) Anmeldetag: 17.06.1999
(51) Int. Cl.: F16K 41/10

(54) **VERFAHREN UND VORRICHTUNG ZUR ÜBERWACHUNG EINES KONTROLLFLUIDES IM BALGINNENRAUM EINER VENTILVORRICHTUNG**
METHOD AND DEVICE FOR MONITORING A CONTROL FLUID IN THE BELLOWS OF A VALVE DEVICE FOR TREATING FLUIDS UNDER ASEPTIC CONDITIONS
PROCEDE ET DISPOSITIF DE SURVEILLANCE D'UN FLUIDE DE COMMANDE CONTENU DANS LE SOUFFLET D'UN DISPOSITIF A SOUPAPE DESTINE AU TRAITEMENT DE FLUIDES DANS DES CONDITIONS D'ASEPSIE

(30) Priorität: 15.07.1998 DE 19831662; 10.04.1999 WO PCT/EP99/02435
(43) Veröffentlichungstag der Anmeldung: 09.05.2001
(73) Patentinhaber: TUCHENHAGEN GmbH, 21514 Büchen (DE)
(72) Erfinder: RAUEN, Wolfgang, D-24149 Kiel (DE)
(74) Vertreter: Graalfs, Edo
(86) Internationale Anmeldenummer: EP9904208
(87) Internationale Veröffentlichungsnummer: WO00004313

(56) Entgegenhaltungen:
- DE-A- 2 949 860
- DE-A- 4 419 487
- DE-U- 9 116 465
- US-A- 2 691 773

## Beschreibung

Die Erfindung betrifft ein Verfahren zur Überwachung eines Kontrollfluides im Balginnenraum einer Ventilvorrichtung zur Behandlung von Fluiden unter aseptischen Bedingungen nach dem Oberbegriff des Anspruchs 1 und eine Vorrichtung zum Durchführen des Verfahrens.

Ein Verfahren der gattungsgemäßen Art ist grundsätzlich mit einem aus der **DE 91 16 465 U1** bekannten Absperrorgan für die Förderung von Fluiden unter aseptischen Bedingungen durchführbar. Bei diesem Absperrorgan überbrückt ein erster Balg eine Ventilstangen-Durchführung durch ein Ventilgehäuse im Bereich des Ventilinnenraumes. Darüber hinaus ist ein zweiter Balg vorgesehen, der einerseits an einem aus dem Ventilgehäuse herausgeführten Teil der Ventilstange und andererseits an einem Verschluß- und Führungsteil befestigt ist. Mit dem bekannten Absperrorgan ist ein Bruch des umgebungsseitigen Balges durch eine beispielsweise als Druckaufnehmer ausgebildete Meldeeinrichtung dann zu erfassen, wenn die Sicherheitszone, der Sterilraum, beispielsweise unter geringem Über- oder Unterdruck endmontiert wird. Bei Bruch des produktraumseitigen Balges erfolgt in jedem Falle eine signifikante Änderung des wie auch immer vorgeprägten Druckes im Sterilraum. In diesem Zusammenhang wird auch bereits vorgeschlagen, anstelle eines Druckaufnehmers beispielsweise auch eine als Feuchtigkeitsanzeige ausgebildete Meldeeinrichtung anzuordnen. Die Anordnung von mehr als einer Meldeeinrichtung schafft zum einen zusätzliche Sicherheit und sie erleichtert zum andern die Interpretation der Schadensursache bei Eintritt eines Balgdefektes.

Die **DE 44 19 487 A1** beschreibt ein Verfahren zur Überwachung des Balginnenraumes eines aseptischen Absperrorganes, vorzugsweise eines aseptischen Doppelsitzventiles mit zwei Bälgen, wie es bereits aus der **DE 42 43 111 A1** bekannt ist, wobei der Balginnenraum mit einem Anschlußstutzen verbunden ist und zum Zwecke seiner vollständigen Befüllung mit einer Flüssigkeit, vorzugsweise mit Glyzerin, zunächst evakuiert wird. Durch eine derartige Maßnahme soll eine vollständige und blasenfreie Befüllung des kompliziert und verzweigt gestalteten Balginnenraumes sichergestellt werden. Bei einem Defekt an einem der beiden Bälge tritt entweder ein Verlust an Kontrollflüssigkeit auf oder aber letztere wird durch das im Ventilgehäuse befindliche Produkt kontaminiert. Eine Änderung des Füllstandes in einem mit dem Balginnenraum verbundenen Reservoir zur Bevorratung der Kontrollflüssigkeit wird über eine Niveaukontrolle überwacht, die die Niveauänderungen infolge der Schaltbewegung des Absperrorgans berücksichtigt. Zusätzlich wird kontinuierlich der Leitwert der Flüssigkeit gemessen, so daß ein Eindringen von Produkt in die Flüssigkeit auch bei konstantem Niveau zu einer Alarmmeldung führt.

Grundsätzlich lassen sich die beiden bekannten Verfahren sowohl auf Absperrorgane mit einem einzigen Schließglied (**DE 91 16 465 U1**) als auch, wie dies die **DE 42 43 111 A1** oder **DE 44 19 487 A1** zeigt, auf Absperrorgane mit zwei relativ zueinander beweglichen Schließgliedem, sogenannte Doppelsitzventile, anwenden. Im ersten Falle befindet sich nur ein Balg im produktraumseitigen Bereich, während ein zweiter Balg im umgebungsseitigen Bereich eine dichtungsfreie Ventilstangen-Durchführung aus dem Ventilgehäuse heraus in die Umgebung sicherstellt. Bei den als Doppelsitzventil ausgebildeten Ventilvorrichtungen sind zwei Bälge im produktraumseitigen Bereich vorgesehen, nämlich ein Balg zwischen einem Verschlußteil und dem benachbarten Ventilgehäuse und einer zwischen den beiden Verschlußteilen.

Die beiden Verfahren sind darüber hinaus aber auch auf ein Faltenbalg-Ventil anwendbar, das mit einem Schließglied und nur einem die Ventilstangen-Durchführung durch das Ventilgehäuse überbrückenden Balg ausgestattet ist **(DE 41 01 860 A1**).

Bei der in der **DE 44 19 487 A1** beschriebenen Sicherheitsschaltung für ein aseptisches Doppelsitzventil wird die Füllstandsüberwachung erst dann ansprechen, wenn eine meßbare Änderung des Volumens des Kontrollfluides eingetreten ist, d.h. wenn der Balg gebrochen ist und ein meßbarer Flüssigkeitsdurchtritt durch die Bruchstelle vorliegt. Feine Haarrisse und daraus resultierende minimale Volumenänderungen des Kontrollfluides sind kaum über die Niveauerfassung sicher und schnell zu erfassen. Bei der vorgesehenen Leitwertüberwachung muß sich das kontaminierte Kontrollfluid im wesentlichen durch Stoffaustauschvorgänge aus den engen und verwickelten Balgfalten, ggf. von entferntester Stelle, bis an die Stelle der Leitwertüberwachung ausbreiten, die im Reservoir für das Kontrollfluid relativ weit außerhalb des Absperrorgans angeordnet ist. Unter den gegebenen Bedingungen ist demzufolge im Falle eines Balgdefektes mit einer unverzüglichen Fehlermeldung nicht zu rechnen.

Die gleichen Nachteile würden sich ergeben, wenn das Absperrorgan gemäß DE 91 16 465 U1 im Bereich der Balginnenräume mit einer Kontrollflüssigkeit, ähnlich wie in der DE 44 19 487 A1 beschrieben, gefüllt würde.

Die bekannten Ventilvorrichtungen zur Behandlung von Fluiden unter aseptischen Bedingungen weisen einen weiteren kritischen Bereich auf, an dem es zu sanitären Problemen kommen kann. Dies ist die Abdichtungsstelle des Balges mit dem Ventilgehäuse, und zwar insbesondere dann, wenn der Balg in diesem Bereich in Form eines als Anschlußflansch ausgebildeten Befestigungsteils ausgeführt ist (**DE 32 15 799 C2; EP 0 508 658 B1**). In diesen beiden Ventilvorrichtungen weist jeweils der Faltenbalg an seinem freien Ende einen zwischen dem eigentlichen Ventilgehäuse und einer Ventillateme einspannbaren Anschlußflansch mit einer konischen Dichtfläche auf, die gegen eine komplementäre Ringsitzfläche des Ventilgehäuses anliegt. Die konische Dichtfläche und die komplementäre Ringsitzfläche bilden einen kritischen Dichtspalt, der unter dem auftretenden Biegemoment, dem der Anschlußflansch bei der Öffnungs- und Schließbewegung der Ventilvorrichtung unterliegt, eine Aufweitung erfährt. Dies insbesondere dann, wenn das Material des Balges und seines Anschlußflansches aus Polytetrafluorethylen (PTFE, beispielsweise Teflon) hergestellt ist, das unter wechselnden Drücken und Temperaturen, über einen längeren Zeitraum gesehen, ein gewisses Kriechverhalten aufweist, wodurch sich die Gestalt des Anschlußflansches geringfügig ändert. Dies führt im Betrieb dazu, daß die eine Aufweitung des Dichtungsspaltes verhindernde, im ursprünglichen Einbauzustand durch die Verpressung des Anschlußflansches erzeugte Vorspannung allmählich nachläßt und der Dichtungsspalt "arbeitet". Dadurch kann es zum Eindringen von Produkt in den "atmenden" Dichtungsspalt kommen. Im derart verschleppten Produkt kann eine Bakterien- oder Keimbildung stattfinden, wodurch dann infolge der Ventilstangenbewegung, des sog. "Fahrstuhleffektes", Reinfektionen des Produktes im Ventilgehäuse hervorgerufen werden können. Defekte im Bereich des vorgenannten kritischen Dichtungsspaltes sind bei den bekannten Ventilvorrichtungen zunächst nicht unmittelbar erkennbar, da dieser Bereich bislang in die Überwachung nicht einbezogen wurde.

Der Erfindung liegt die Aufgabe zugrunde, die Sicherheit der bekannten Ventilvorrichtungen und der mit diesen durchführbaren Kontrollverfahren dahingehend zu verbessern, daß ein Defekt an dem Balg oder an einem der Bälge oder an der Abdichtungsstelle des Balges mit dem Ventilgehäuse schneller und zuverlässiger als bisher möglich feststellbar ist.

Diese Aufgabe wird durch ein Verfahren mit den Merkmalen des Anspruchs 1 gelöst. Vorteilhafte Ausgestaltungen des Verfahrens sind Gegenstand der Unteransprüche. Eine Vorrichtung zum Durchführen des Verfahrens ist Gegenstand des Anspruchs 11. Vorteilhafte Ausgestaltungen der Vorrichtung sind Gegenstand der auf Anspruch 11 bezogenen Unteransprüche.

Die vorgeschlagene Erfindung macht sich die Erkenntnis zu Nutze, daß eine zuverlässige Früherkennung eines Balgdefektes nur dann gelingt, wenn das an der Stelle des Balgdefektes mit Fremdsubstanzen kontaminierte Kontrollfluid so schnell wie möglich, auch aus dem entlegensten und verwickeltsten Bereich des Balginnenraumes, an eine Stelle transportiert wird, an der eine derartige Kontamination mit Fremdsubstanzen detektierbar ist. Dies wird gemäß der Erfindung durch eine zwangsweise Durchströmung des Balginnenraumes mit einem aus dem Kontrollfluid bestehenden Kontrollstrom erreicht.

Eine erste und besonders vorteilhafte Ausgestaltung des vorgeschlagenen Verfahrens macht sich die Schaltbewegung der Ventilvorrichtung, seine Öffnungsoder Schließbewegungen, zu Nutze, um einen aus dem Kontrollfluid bestehenden Kontrollstrom zu generieren. Die Förderung des Kontrollstromes wird dadurch erreicht, daß die durch die Schließbewegung des Schließgliedes hervorgerufene Dilatation des Balginnenraumes und die durch die gegenläufige Öffnungsbewegung hervorgerufene Kontraktion des Balginnenraumes eine Pumpwirkung erzeugt. Dabei erfolgt durch die Dilatation des Balginnenraumes ein Ansaugen des Kontrollfluids aus der Umgebung der Ventilvorrichtung in den Balginnenraum. Durch die Kontraktion des Balginnenraumes wird ein Ausschub des Kontrollfluids aus diesem in die Umgebung der Ventilvorrichtung bewirkt.

Gemäß einer zweiten Ausgestaltung des vorgeschlagenen Verfahrens wird der Kontrollstrom durch eine von der Schaltbewegung der Ventilvorrichtung unabhängige Maßnahme zur Erzeugung eines für die Durchströmung des Balginnenraumes erforderlichen Druckgradienten im Kontrollfluid generiert. Dabei kann der erforderliche Druckgradient beispielsweise mittels einer Fördereinrichtung bereitgestellt werden, die sich vorzugsweise außerhalb der Ventilvorrichtung befindet und wenigstens einer dieser Ventilvorrichtungen zugeordnet ist.

Der durch die beiden vorstehend dargestellten Verfahrensvarianten erzeugte Kontrollstrom wird dabei zweckmäßig derart zwangsweise geführt, daß er den Balginnenraum in geeigneter Weise durchströmt. Geeignet ist eine Durchströmung dann, wenn ggf. kontaminiertes Kontrollfluid aus einer entlegensten Balgfalte an eine geeignete, eine Kontamination des Kontrollfluids detektierende Meßstelle transportiert wird. In diesem Zusammenhang wird vorgeschlagen, daß die Durchströmung des Balginnenraumes an einer dem Verschlußteil benachbarten Balgfalte beginnt und sich bis zum anderen Ende des Balges und darüber hinaus fortsetzt.

Da sich die im Kontrollfluid ggf. enthaltenen Gasblasen ungünstig auf den Transport kontaminierter Kontrollflüssigkeit auswirken können, ist gemäß einer vorteilhaften Ausgestaltung des vorgeschlagenen Verfahrens vorgesehen, daß sich der mit Kontrollfluid gefüllte Balginnenraum selbst entlüftet. Dies geschieht dadurch, daß die Strömungsrichtung des Kontrollstromes im Balginnenraum und die Auftriebsrichtung von Gasblasen in einem flüssigen Kontrollfluid wenigstens eine gemeinsame Richtungskomponente aufweisen. Durch diese Konstellation werden Gasblasen, wo immer sie sich in den verwickelten Balgfalten befinden, mehr oder weniger zügig aus diesem Bereich herausgefördert, und zwar in Richtung ihres schwerkraftbedingten Auftriebes. Die Kontraktion und Dilatation des Balginnenraumes infolge der Schaltbewegung der Ventilvorrichtung unterstützen diesen Auftriebsvorgang wirksam.

Um eine Kontamination des Kontrollfluids mit Fremdsubstanz möglichst schnell und zuverlässig festzustellen, sieht eine weitere Ausgestaltung des Verfahrens vor, daß im Bereich des aus dem Balginnenraum austretenden Kontrollfluids eine diesbezügliche Detektion durchgeführt wird.

Die Überwachung der Generierung und Aufrechterhaltung des Kontrollstromes im Balginnenraum erfolgt durch eine optische Fließkontrolle an geeigneter Stelle der Ventilvorrichtung, wie dies eine andere Ausgestaltung des vorgeschlagenen Verfahrens vorsieht.

Darüber hinaus ist es möglich, wie dies ebenfalls vorgesehen ist,daß der Füllstand des Kontrollfluids im Balginnenraum und in mit diesem verbundenen Systemen überwacht wird. Eine derartige Füllstandsüberwachung erfolgt in den Grenzen der durch die Hubbewegung der Ventilvorrichtung bedingten Niveauänderungen.

Um auch die kritische Abdichtungsstelle zwischen dem als Anschlußflansch ausgebildeten Befestigungsteil des Balges und dem Ventilgehäuse in die Überwachung einbeziehen zu können, sieht eine weitere Ausgestaltung des vorgeschlagenen Verfahrens vor, daß auch diese Abdichtungsstelle mit dem Kontrollstrom überwacht wird. Hierzu ist weiterhin vorgesehen, daß der Kontrollstrom vor der Durchströmung des Balges aufgeteilt, ein Teilstrom zur Überwachung der Abdichtungsstelle verwendet und anschließend dieser Teilstrom mit dem aus dem Balg abströmenden Teilstrom zusammengeführt wird.

Zum Durchführen des Verfahrens weist die Vorrichtung in einem Verschluß- und Führungsteil, durch das die Ventilstange hindurch- und aus dem Ventilgehäuse herausgeführt ist, zwei voneinander getrennte Kammern auf. Der Balginnenraum mündet an seinem dem Verschlußteil des Schließgliedes abgewandten Ende in die zweite Kammer ein, während die erste Kammer über Verbindungsbohrungen innerhalb der Ventilstange mit dem dem Verschlußteil unmittelbar benachbarten Bereich des Balginnenraumes permanent verbunden ist. Damit der Balginnenraum zwangsweise durchströmt werden kann, sind die erste Kammer über einen Zulaufkanal und die zweite Kammer über einen Ablaufkanal jeweils mit der Umgebung der Ventilvorrichtung verbunden.

Eine baulich relativ einfache Anordnung ergibt sich dadurch, wie dies weiterhin vorgeschlagen wird, daß die beiden Kammern die Ventilstange jeweils ringförmig und unmittelbar umschließen und über eine im Verschluß- und Führungsteil angeordnete, gegen die Ventilstange dichtende erste Stangendichtung voneinander getrennt sind.

Um eine mögliche Kontamination des Kontrollfluides mit Fremdsubstanz zuverlässig und schnell festzustellen, ist vorgesehen, daß in der zweiten Kammer oder in dem Ablaufkanal ein das Kontrollfluid detektierender Sensor angeordnet ist.

Werden, wie dies auch vorgesehen ist, der Zulauf- und der Ablaufkanal mit einem gemeinsamen Reservoir für das Kontrollfluid verbunden und zusätzlich der Füllstand im Reservoir in den Grenzen der durch die Hubbewegung der Ventilvorrichtung bedingten Niveauänderungen überwacht, dann lassen sich Balgdefekte und daraus resultierende Volumenänderungen des Kontrollfluids auch durch ein vom vorstehend genannten ersten Meßverfahren unabhängiges zweites Meßverfahren feststellen.

Gemäß einer ersten favorisierten Ausgestaltung der vorgeschlagenen Vorrichtung ist in dem Zulaufkanal zur ersten Kammer ein erstes Einwegventil für das in den Balginnenraum eintretende Kontrollfluid angeordnet. Die zwangsweise Abfuhr des Kontrollfluides aus der zweiten Kammer erfolgt über den an diese Kammer angeschlossenen Ablaufkanal, in dem sich ebenfalls ein Einwegventil für das austretende Kontrollfluid befindet. Diese Vorrichtung arbeitet quasi wie eine oszillierende Verdrängerpumpe mit Säug- und Druckventil, wobei der sein Volumen ändernde Pumpenraum durch die Dilatation und Kontraktion des Balginnenraumes gebildet wird.

Wird eine Fördereinrichtung vorgesehen, wie dies eine zweite Ausgestaltung der Vorrichtung gemäß der Erfindung vorschlägt, die jeweils unmittelbar oder mittelbar mit ihrem druckseitigen Auslaß an den Zulaufkanal und mit ihrem saugseitigen Einlaß an den Ablaufkanal angeschlossen ist, dann ergibt sich eine Anordnung, die unabhängig von der Schaltbewegung der Ventilvorrichtung eine zwangsweise Durchströmung des Balginnenraumes mit dem aus dem Kontrollfluid bestehenden Kontrollstrom sicherstellt. Eine derartige Ausgestaltung ist immer dann von Vorteil, wenn das zu überwachende Absperrventil lediglich in sehr großen zeitlichen Abständen schaltet.

Die Kontrolle der Abdichtungsstelle des als Anschlußflansch ausgebildeten Befestigungsteils des Balges mit dem Ventilgehäuse wird dadurch sichergestellt, wie dies eine weitere vorteilhafte Ausgestattung der vorgeschlagenen Vorrichtung vorsieht, daß einer ersten Abdichtungsstelle eines am Balg angeordneten gehäuseseitigen Befestigungsteils mit dem Ventilgehäuse, in Richtung zur Umgebung der Ventilvorrichtung gesehen, eine zweite Abdichtungsstelle zwischen dem Ventilgehäuse einerseits und dem Befestigungsteil oder einem mit letzterem in dichtendem Kontakt stehenden Verschluß- und Führungsteil oder einem Stützkörper andererseits nachgeordnet ist. Zwischen diesen beiden Abdichtungsstellen ist ein Leckagehohlraum angeordnet, der über wenigstens einen zweiten Ablaufkanal mit der zweiten Kammer verbunden ist. Auf diesem Wege können Leckagen, die bei Überdruck im Ventilgehäuse gegenüber der Umgebung der Ventilvorrichtung die defekte erste Abdichtungsstelle passieren, in das Kontrollfluid gelangen und dort somit mehr oder weniger unverzüglich detektiert werden. Bei Unterdruck im Ventilgehäuse gegenüber der Umgebung der Ventilvorrichtung ist die Situation insofern besser als bei Vorrichtungen nach dem Stand der Technik, da allenfalls unschädliches Kontrollfluid über eine defekte erste Abdichtungsstelle in den Produktraum gesaugt wird.

Wird zusätzlich der Leckagehohlraum auch noch über wenigstens einen zweiten Zulaufkanal mit der ersten Kammer verbunden, dann ist eine zwangsweise Durchströmung des Leckagehohlraumes sichergestellt, so daß in jedem Falle ein Defekt an der ersten Abdichtungsstelle unverzüglich detektierbar und damit erkennbar ist.

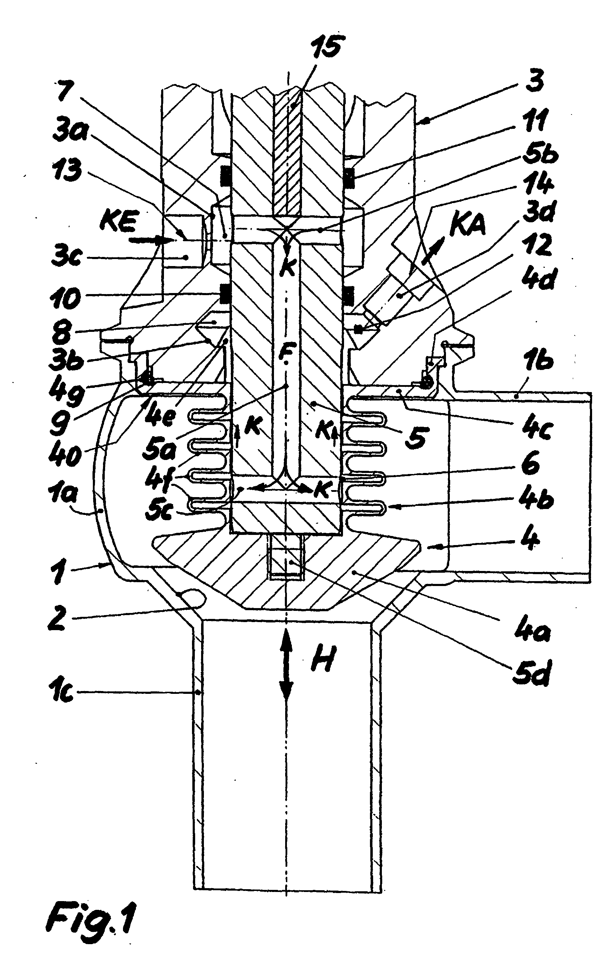

Ausführungsbeispiele der Erfindung sind in der Zeichnung dargestellt und werden nachstehend erläutert. Es zeigen
- **Figur 1**: einen Mittelschnitt durch eine erste Ausführungsform einer Vorrichtung zur Durchführung des Verfahrens gemäß der Erfindung;
- **Figur 2**: einen Mittelschnitt durch die Vorrichtung gemäß **Figur 1** im Bereich der Abdichtungsstelle des Balges mit dem Ventilgehäuse, bei der dieser Bereich in die Überwachung mittels des Kontrollfluides einbezogen wird;
- **Figur 3**: einen Mittelschnitt durch die vorgeschlagene Vorrichtung im Bereich der Abdichtungsstelle des Balges mit dem Ventilgehäuse in einer zweiten Ausführungsform und
- **Figur 4**: ebenfalls im Mittelschnitt den Abdichtungsbereich gemäß **Figur 3** in einer dritten Ausführungsform.

Bei der nachfolgenden Beschreibung kann offenbleiben, ob die Öffnungs- und Schließbewegung eines Schließgliedes einer Ventilvorrichtung 1 zur Generierung eines Kontrollstromes K genutzt wird oder ob der Kontrollstrom K generiert wird durch eine von der Schaltbewegung der Ventilvorrichtung 1 unabhängige Maßnahme zur Erzeugung eines für die Durchströmung des Balginnenraumes erforderlichen Druckgradienten im Kontrollfluid F, beispielsweise durch eine außerhalb der Ventilvorrichtung 1 angeordnete Fördereinrichtung.

Die Ventilvorrichtung 1, die im vorliegenden Fall als Absperrventil mit einfacher Abdichtung im Sitzbereich ausgebildet ist, besteht im wesentlichen aus einem Ventilgehäuse 1a mit Gehäuseanschlüssen 1b und 1c. In der Nachbarschaft des Gehäuseanschlusses 1c befindet sich eine Sitzfläche 2, die mit einem Verschlußteil 4a eines Schließgliedes 4 zusammenarbeitet. Das Verschlußteil 4a wird über eine Ventilstange 5 betätigt, die über ein an letzterer angeordnetes Befestigungsteil 5d mit dem Verschlußteil 4a verbunden ist. Das Ventilgehäuse 1a ist auf seiner der Sitzfläche 2 abgewandten Seite mit einem Verschluß- und Führungsteil 3 verschlossen, durch das die Ventilstange 5 hindurch- und aus dem Ventilgehäuse 1a herausgeführt ist. Die Ventilstangen-Durchführung wird mittels eines Balges 4b, insbesondere eines Faltenbalges oder Wellrohres, überbrückt, der die Ventilstange 5 umschließt und einerseits unmittelbar am Verschlußteil 4a befestigt ist und andererseits mittels einer Verschluß- und Befestigungsplatte 4c in Verbindung mit einem Anschlußflansch 4d zwischen Ventilgehäuse 1a und Verschluß- und Führungsteil 3 abgedichtet eingeklemmt ist. Die spaltfreie Einbettung der Verschluß- und Befestigungsplatte 4c in das benachbarte Ventilgehäuse 1a wird durch einen dauerelastischen Druckring 9, der in eine Nut 4g auf der dem Ventilinnenraum abgewandten Seite der Verschluß- und Befestigungsplatte 4c eingepreßt ist, sichergestellt. Damit die Verschluß- und Befestigungsplatte 4c des Balges 4b beim Schließen der Ventilvorrichtung 1 nicht in den Ventilinnenraum ausgewölbt wird, ist auf der Rückseite der Verschluß- und Befestigungsplatte 4c eine Verankerung 4e vorgesehen, die in das Verschluß- und Führungsteil 3 formschlüssig eingreift. Die Verankerung 4e kann beispielsweise auch als Verschraubung ausgeführt werden.

Im Verschluß- und Führungsteil 3 wird von einer ersten Ausnehmung 3a eine erste Kammer 7 gebildet, die die Ventilstange 5 ringförmig und unmittelbar umschließt. Unterhalb der ersten Kammer 7 befindet sich, ebenfalls im Verschlußund Führungsteil 3, eine durch eine zweite Ausnehmung 3b gebildete zweite Kammer 8, die ebenfalls die Ventilstange 5 ringförmig und unmittelbar umschließt. Die beiden Kammern 7 und 8 sind über eine im Verschluß- und Führungsteil 3 angeordnete, gegen die Ventilstange 5 dichtende erste Stangendichtung 10 voneinander getrennt.

Der Balg 4b bildet zwischen seiner inneren Begrenzungsoberfläche und der ihn durchdringenden Ventilstange 5 einen Balginnenraum 6 aus, der an seinem dem Verschlußteil 4a abgewandten Ende in die zweite Kammer 8 einmündet. Die erste Kammer 7 ist über Verbindungsbohrungen 5a, 5b und 5c innerhalb der Ventilstange 5 mit dem dem Verschlußteil 4a unmittelbar benachbarten Bereich des Balginnenraumes 6 permanent verbunden. Dieser Verbindungsweg führt dabei aus der ersten Kammer 7 über radiale Zulaufbohrungen 5b, anschließend über eine vorzugsweise in der Achse der Ventilstange 5 angeordnete Transportbohrung 5a und danach über radiale Ablaufbohrungen 5c in den entlegensten Teil des Balginnenraumes 6. Die Herstellung der Transportbohrung 5a bedingt ein Aufbohren der Ventilstange 5 im Bereich oberhalb der radialen Zulaufbohrungen 5b. Ein Verschlußstopfen 15 verschließt diese beim Betrieb der Ventilvorrichtung nicht benötigte Bohrung.

Zur ersten Kammer 7 führt aus der Umgebung der Ventilvorrichtung ein Zulaufkanal 3c, in dem für den Fall, daß die Öftnungs- und Schließbewegung des Schließgliedes zur Generierung des Kontrollstromes K genutzt werden soll, ein nicht dargestelltes erstes Einwegventil 13 für das in den Balginnenraum 6 eintretende Kontrollfluid KE angeordnet ist. In einem die zweite Kammer 8 mit der Umgebung der Ventilvorrichtung verbindende Ablaufkanal 3d ist für diesen Fall ein gleichfalls nicht gezeigtes zweites Einwegventil 14 für das austretende Kontrollfluid KA vorgesehen.

Falls die Durchströmung des Balginnenraumes 6 durch eine außerhalb der Ventilvorrichtung 1 angeordnete, nicht dargestellte und bezeichnete Fördereinrichtung sichergestellt werden soll, wird diese Fördereinrichtung jeweils unmittelbar oder mittelbar mit ihrem druckseitigen Auslaß an den Zulaufkanal 3c und mit seinem saugseitigen Einlaß an den Ablaufkanal 3d angeschlossen.

Eine auf der dem Verschlußteil 4a abgewandten Seite der ersten Kammer 7 im Verschluß- und Führungsteil 3 angeordnete und gegen die Ventilstange 5 abdichtende zweite Stangendichtung 11 sorgt dafür, daß diese Ventilstangen-Durchführung zur Umgebung hin abgedichtet ist. Anstelle dieser Stangendichtung 11 kann auch ein zweiter Balg vorgesehen werden, wie dies beispielsweise die Druckschrift DE 91 16 465 U1 zeigt.

Die Ventilvorrichtung 1 führt bei ihrer Schließ- oder Öffnungsbewegung jeweils einen Hub H aus. Bei der Öffnungsbewegung ergibt sich eine Kontraktion des Balginnenraumes 6, so daß die Balgfalten 4f zusammengedrückt werden und dabei Kontrollfluid F aus diesem Bereich herausgepreßt und, falls die Einwegventile 13 und 14 vorgesehen sind, über den ringförmigen Spalt zwischen Balg 4b und Ventilstange 5 in die zweite Kammer 8 befördert wird. Von hier aus strömt das Kontrollfluid F über das Einwegventil 14 im Ablaufkanal 3d aus der Ventilvorrichtung 1 ab. Über eine nicht dargestellte Leitung wird das Kontrollfluid F in ein ebenfalls nicht dargestelltes Reservoir zu seiner Bevorratung überführt.

Bei der Schließbewegung des Schließgliedes 4 ergibt sich eine Dilatation des Balginnenraumes 6. Dabei werden die sich in ihrem Volumen erweiternden Balgfalten 4f durch das Kontrollfluid F aufgefüllt, das über die Verbindungsbohrungen 5a, 5b und 5c aus der ersten Kammer 7 zugeführt wird. Der ersten Kammer 7 strömt das Kontrollfluid F über den Zulaufkanal 3c und das in diesem angeordnete erste Einwegventil 13 zu. Die vorstehend geschilderte Pumpwirkung erzeugt einen intermittierend auftretenden Kontrollstrom K, der den Balginnenraum 6 in der geschilderten und in der Figur dargestellten Richtung zwangsweise durchströmt.

Wird zur zwangsweisen Durchströmung des Balginnenraumes 6 eine Fördereinrichtung vorgesehen, dann überlagern sich der Strömung, die von dieser Fördereinrichtung erzeugt wird, Ausgleichsströmungen durch die in der Regel in größeren Zeitabständen erfolgenden Schaltbewegungen der Ventilvorrichtung 1, wobei diese Ausgleichsströmungen eine Folge der Dilatation und Kontraktion des Balginnenraumes 6 sind. Die Ausgleichsströmungen beeinflussen allenfalls während des Schaltspiels der Ventilvorrichtung 1 die planmäßig erwünschte Durchströmung des Balginnenraumes in der vorgesehenen Richtung. Eine sichere und schnelle Detektion des Kontrollfluids F auf Kontamination mit Fremdsubstanzen bleibt dabei in jedem Falle sichergestellt.

Der Zulaufkanal 3c ist, ebenso wie der Ablaufkanal 3d, an das Reservoir für das Kontrollfluid F angeschlossen. Dadurch schließt sich der Kreislauf für das Kontrollfluid F, so daß der Füllstand im Reservoir in den Grenzen der durch die Hubbewegung der Ventilvorrichtung 1 bedingten Niveauänderungen überwacht werden kann.

In der zweiten Kammer 8 oder auch in dem sich anschließenden Ablaufkanal 3d ist ein das Kontrollfluid F auf Kontamination mit Fremdsubstanzen detektierender Sensor 12 angeordnet.

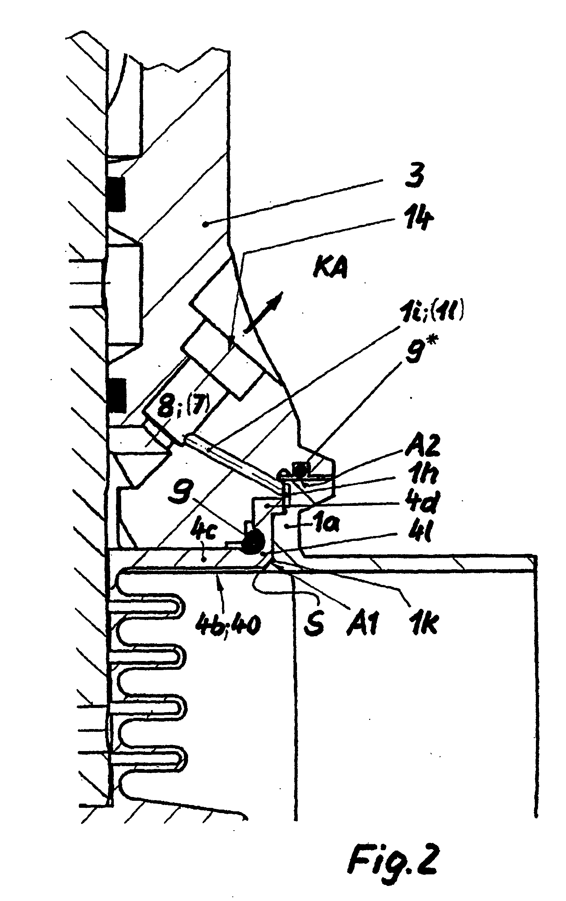

Die Verschluß- und Befestigungsplatte 4c (**Figur 2**) des gehäuseseitigen Befestigungsteils 40 des Balges 4b bildet mit einer Dichtmembran 4l in Verbindung mit einer gehäuseseitigen Ringsitzfläche 1k des Ventilgehäuses 1a eine erste Abdichtungsstelle A1, die den kritischen Dichtspalt S entstehen läßt. Falls nun die Vorspannung an der ersten Abdichtungsstelle A1 durch "Kriechen" des Balgmaterials nachläßt, insbesondere unter der Einwirkung von Biegemomenten an der Verschluß- und Befestigungsplatte 4c, und dadurch beispielsweise Produkt als Leckage in den Dichtspalt S gelangt, kann diese Leckage über einen Leckagehohlraum 1h, der hinter der ersten Abdichtungsstelle A1 angeordnet ist, und einen zweiten Ablaufkanal 1i in die zweite Kammer 8 abgeführt werden. Die Abdichtung des Leckagehohlraums 1h zur Umgebung der Ventilvorrichtung 1 hin erfolgt über eine zweite Abdichtungsstelle A2, die zwischen dem Ventilgehäuse 1a und dem Verschluß- und Führungsteil 3 unter Zwischenschaltung einer Dichtung 9* gebildet wird. Während der Bereich zwischen dem Leckagehohlraum 1h und der Umgebung der Ventilvorrichtung 1 durch die zweite Abdichtungsstelle A2 hinreichend abgedichtet sein muß, ist es von Vorteil, wenn der Bereich zwischen der ersten Abdichtungsstelle A1 und dem Leckagehohlraum 1h, insbesondere im Bereich des kragenförmig ausgebildeten Anschlußflansches 4d, möglichst durchlässig ausgeführt ist, damit ggf. auftretende Leckagen unbehindert in den Leckagehohlraum 1 h und von dort über den zweiten Ablaufkanal 1i abgeführt werden können.

Falls der Leckagehohlraum 1h über wenigstens einen zweiten Zulaufkanal 1l mit der ersten Kammer 7 verbunden ist, und zwar zweckmäßigerweise auf der dem zweiten Ablaufkanal 1i gegenüberliegenden Seite der Ventilvorrichtung 1, ist in jedem Falle eine zwangsweise Durchströmung des Leckagehohlraums 1h und damit eine unverzügliche Detektierung ggf. auftretender Leckagen sichergestellt.

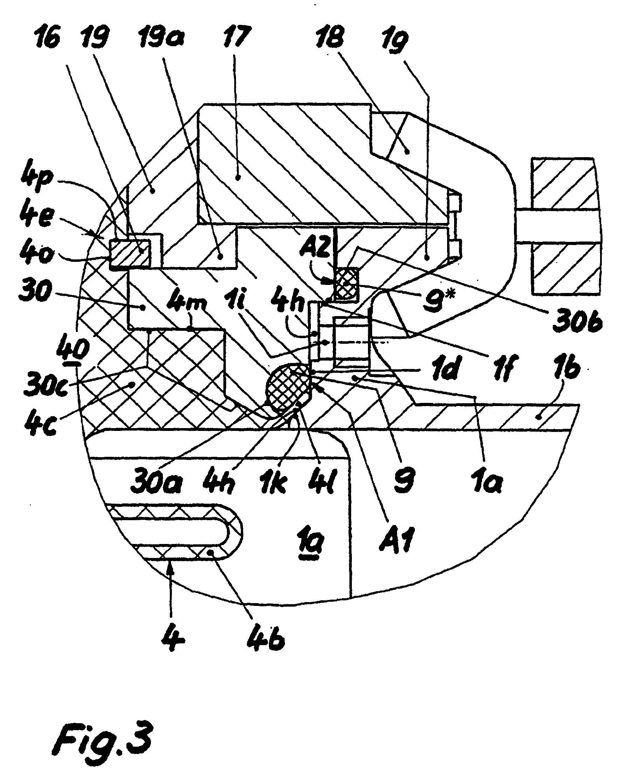

Die scheibenförmige Verschlußplatte 4c ist radial außenseits auf eine den festigkeitsbedingten Erfordernissen entsprechende Mindestwandstärke in Form eines membranförmigen Dichtelements 4l reduziert (**Figur 3**). Das membranförmige Dichtelement 4l ist in Form eines in Richtung der komplementären Ringsitzfläche 1k im Ventilgehäuse 1 a orientierten Fortsatzes an der Verschlußplatte 4c ausgebildet und es weist eine mit der Ringsitzfläche 1k zusammenwirkende konische Dichtfläche 4h auf. Letztere wird über einen vorgespannten elastischen Druckring 9, der auf der der konischen Dichtfläche 4h des membranförmigen Dichtelements 41 abgewendeten Seite angeordnet ist, auf die komplementäre Ringsitzfläche 1k gepreßt. Der elastische Druckring 9 wird von einer nutförmigen Ausnehmung 30a in einem Stützkörper 30 aufgenommen und im Zusammenwirken mit der Mantelfläche der oberen Gehäuseöffnung 1d bis auf jenen Teil umschlossen, welcher mit dem membranförmigen Dichtelement 4l in Kontakt steht. Der Stützkörper 30 findet in der oberen Gehäuseöffnung 1d des Ventilgehäuses 1a koaxial zur Ventilstange 5 Aufnahme, und er stützt sich axial in Richtung des Innenraumes des Ventilgehäuses 1a über eine erste Stützfläche 30b auf einer an die obere Gehäuseöffnung 1d angrenzende Anschlagfläche 1f ab.

Im gespannten Zustand des Systems erfährt der elastische Druckring 9 somit eine definierte Vorspannung mit metallischem Anschlag des Spannelementes, dem Stützkörper 30. Die Einbettung des Stützkörpers 30 und seine Anlage an der Anschlagfläche 1f erfolgt über einen Laternenflansch 19a der Laterne 19, der innerhalb eines Gehäuseflansches 1g aufgenommen und koaxial zentriert wird. Die form- und kraftschlüssige Einbettung des Laternenflansches 19 im Gehäuseflansch 1g besorgt ein Klemmflansch 17, der mittels eines Verbindungselementes 18, beispielsweise eines sog. Klappringes, mit dem Gehäuseflansch 1g verspannt ist. Der Stützring 30 verfügt, ausgehend von der Ausnehmung 30a und bezogen auf seinen weiteren radialen Erstreckungsbereich, über eine zweite Stützfläche 30c, die die komplementäre Verschlußplatte 4c mit deren erster Stützfläche 4m, in axialer Richtung gesehen, von außen stützt. Dadurch können Kräfte, die vom Innenraum des Gehäuses 1a nach außen wirken, vom Stützkörper 30 aufgenommen und über den Laternenflansch 19a, den Klemmflansch 17 und das Verbindungselement 18 in den Gehäuseflansch 1g und somit in das Ventilgehäuse 1 a abgeleitet werden. Bei einer Beanspruchung der Verschlußplatte 4c in umgekehrter Richtung, d.h. von außen nach innen, beispielsweise durch Strekkung des Balges 4b in die Schließlage der Ventilvorrichtung 1 oder in Folge Unterdruckbildung im Innenraum des Ventilgehäuses 1a, werden die daraus resultierenden Kräfte vom Befestigungsteil 4e über ein in letzteres formschlüssig eingreifendes Sicherungselement 16 auf den Stützkörper 30 übertragen, der sich bei dieser Beanspruchungsrichtung unmittelbar über seine erste Stützfläche 30b auf die Anschlagfläche 1f am Ventilgehäuse 1a abstützt. Zu diesem Zweck ist in dem Befestigungsteil 4e eine Sicherungsnut 4o vorgesehen, die mit einer zweiten Stützfläche 4p auf dem Sicherungsring 16 aufliegt.

Hinter der ersten Abdichtungsstelle A1 ist im Ventilgehäuse 1 a ein als ringförmige Ausnehmung ausgebildeter Leckagehohlraum 1h vorgesehen, der zur Umgebung der Ventilvorrichtung 1 hin über eine zweite Abdichtungsstelle A2, die zwischen dem Stützkörper 30 und dem Ventilgehäuse 1a durch Zwischenschaltung eine Dichtung 9* gebildet wird, abgedichtet ist.

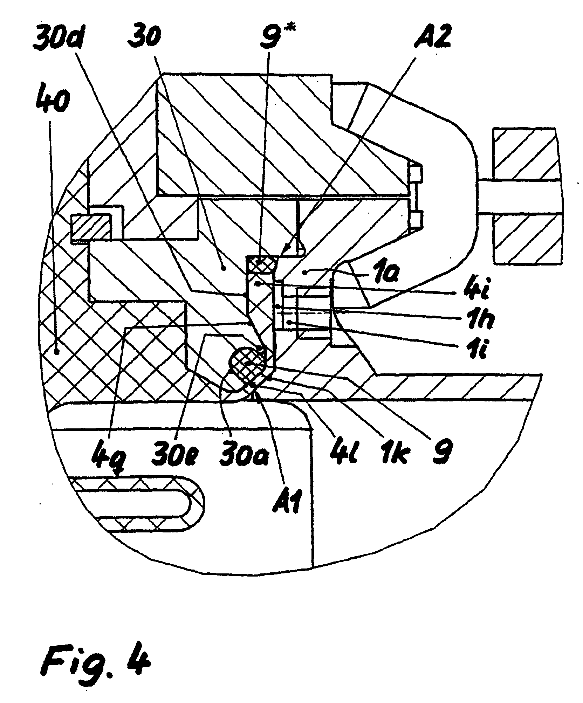

Um sicherzugehen, daß auch bei extremsten Beanspruchungen ein Herausreißen des membranförmigen Dichtelements 4l aus seiner Einspannstellung zwischen der Ringsitzfläche 1 k und dem Druckring 9 vermieden wird, sieht eine Weiterbildung der vorstehend beschriebenen Anordnung gemäß **Figur 3** vor, daß sich der Fortsatz des membranförmigen Dichtelements 4l in einen sich in Richtung der Ventilstange 5 erstreckenden ringförmigen Kragen 4i verlängert (**Figur 4**) und dabei keilförmig erweitert, und daß der Kragen 4i zwischen dem Stützring 30 und der Mantelfläche der oberen Gehäuseöffnung 1d Aufnahme findet. Der Kragen 4i weist somit in seinem unteren Bereich keilförmige Form auf, so daß bei einer zum Innenraum hin gerichteten Zugbeanspruchung des membranförmigen Dichtelements 4l der mit diesem verbundene Kragen 4i zwischen einer ringförmig Ausnehmung 30d im Stützkörper 30, die in einer Keilfläche 4q endet, und der gegenüberliegenden Mantelfläche der oberen Gehäuseöffnung 1d verkeilt wird. Die Keilfläche 4q ist an einem Vorsprung 30e ausgebildet, der einen Teil der nutförmigen Ausnehmung 30a für den elastischen Druckring 9 berandet.

Damit der Kragen 4i bereits im von Betriebskräften freien Zustand in seiner ihn einbettenden Umgebung vorgespannt und verkeilt ist, ist weiterhin vorgesehen, ihn, in axialer Richtung gesehen, endseitig von einem elastischen Druckring 9* zu beaufschlagen, der von dem Stützring 30 in Verbindung mit der Mantelfläche der oberen Gehäuseöffnung 1d verpreßt ist.

Um den zwischen den beiden Abdichtungsstellen A1 und A2 ausgebildeten Leckagehohlraum 1h zu überwachen und ggf. von Leckagen zu befreien (vgl. **Figuren 3** und **4**), ist in beiden Fällen vorgesehen, daß der Leckagehohlraum 1h über wenigstens einen zweiten Ablaufkanal 1i mit der zweiten Kammer 8 verbunden ist. Dies erfolgt im vorliegenden Falle zweckmäßigerweise über eine außerhalb der Ventilvorrichtung angeordnete, nicht dargestellte und bezeichnete Verbindungsleitung.

Wird der Leckagehohlraum 1h über wenigstens einen zweiten Zulaufkanat 1l mit der ersten Kammer 7 verbunden (s. auch Figur 2), und zwar zweckmäßigerweise auf der dem zweiten Ablaufkanal 1i gegenüberliegenden Seite der Ventilvorrichtung 1, ist in jedem Falle eine zwangsweise Durchströmung des Leckagehohlraums 1h und damit eine unverzügliche Detektierung ggf. auftretender Leckagen sichergestellt.

Das vorgeschlagene Verfahren und die wesentlichen Merkmale der Vorrichtung zu seiner Durchführung lassen sich uneingeschränkt auch auf eine Ventilvorrichtung gemäß DE 91 16 465 U1 oder DE 42 43 111 A1 oder DE 44 19 487 A1 übertragen.

## Patentansprüche

1. Verfahren zur Überwachung eines Kontrollfluids im Balginnenraum einer Ventilvorrichtung zur Behandlung von Fluiden unter aseptischen Bedingungen, wobei der als Faltenbalg oder Wellrohr ausgebildete Balg eine Ventilstangen-Durchführung durch das Ventilgehäuse der Ventilvorrichtung derart überbrückt, daß er die Ventilstange umschließt und einerseits an einem Verschlußteil eines Schließgliedes oder an der Ventilstange und andererseits unmittelbar oder mittelbar am Ventifgehäuse befestigt ist, **dadurch gekennzeichnet, daß** eine zwangsweise Durchströmung des Balginnenraumes mit einem aus dem Kontrollfluid bestehenden Kontrollstrom vorgesehen ist.

2. Verfahren nach Anspruch 1, **dadurch gekennzeichnet,**
• **daß** die Öffnungs- und Schließbewegung eines Schließgliedes zur Generierung des Kontrollstromes genutzt wird,
• indem die durch die Schließbewegung des Schließgliedes hervorgerufene Dilatation des Balginnenraumes ein Ansaugen des Kontrollfluids aus der Umgebung der Ventilvorrichtung in den Balginnenraum und
• die durch die gegenläufige Öffnungsbewegung hervorgerufene Kontraktion des Balginnenraumes einen Ausschub des Kontrollfluids aus dem Balginnenraum in die Umgebung der Ventilvorrichtung bewirkt.

3. Verfahren nach Anspruch 1, **dadurch gekennzeichnet, daß** der Kontrollstrom generiert wird durch eine von der Schaltbewegung der Ventilvorrichtung unabhängige Maßnahme zur Erzeugung eines für die Durchströmung des Balginnenraumes erforderlichen Druckgradienten im Kontrollfluid.

4. Verfahren nach einem der Ansprüche 1 bis 3, **dadurch gekennzeichnet, daß** die Durchströmung des Balginnenraumes an einer dem Verschlußteil benachbarten Balgfalte beginnt und sich bis zum anderen Ende des Balges und darüber hinaus fortsetzt.

5. Verfahren nach einem der Ansprüche 1 bis 4, **dadurch gekennzeichnet, daß** die Strömungsrichtung des Kontrollstromes im Balginnenraum und die Auftriebsrichtung von Gasblasen in einem flüssigen Kontrollfluid wenigstens eine gemeinsame Richtungskomponente aufweisen.

6. Verfahren nach einem der Ansprüche 1 bis 5, **dadurch gekennzeichnet, daß** im Bereich des aus dem Balginnenraum austretenden Kontrollfluids eine Detektion desselben auf Kontamination mit Fremdsubstanzen durchgeführt wird.

7. Verfahren nach einem der Ansprüche 1 bis 6, **dadurch gekennzeichnet, daß** eine optische Fließkontrolle des Kontrollstromes vorgenommen wird.

8. Verfahren nach einem der Ansprüche 1 bis 7, **dadurch gekennzeichnet, daß** der Füllstand des Kontrollfluids im Balginnenraum und in mit diesem verbundenen Systemen überwacht wird.

9. Verfahren nach einem der Ansprüche 1 bis 8, **dadurch gekennzeichnet, daß** zusätzlich auch die Abdichtungsstelle des Balges mit dem Ventilgehäuse mit dem Kontrollstrom überwacht wird.

10. Verfahren nach Anspruch 9, **dadurch gekennzeichnet, daß** der Kontrollstrom vor der Durchströmung des Balges aufgeteilt, ein Teilstrom zur Überwachung der Abdichtungsstelle verwendet und anschließend dieser Teilstrom mit dem aus dem Balg abströmenden Teilstrom zusammengeführt wird.

11. Vorrichtung zum Durchführen des Verfahrens nach einem der Ansprüche 1 bis 10, **dadurch gekennzeichnet,**
• **daß** in einem Verschluß- und Führungsteil (3) des Absperrventils (1), durch das die Ventilstange hindurch- und aus dem Ventilgehäuse (1a) herausgeführt ist, zwei voneinander getrennte Kammern (7,8) vorgesehen sind,
• **daß** der Balginnenraum (6) an seinem dem Verschlußteil (4a) abgewandten Ende in die zweite Kammer (8) einmündet,
• **daß** die erste Kammer (7) über Verbindungsbohrungen (5a, 5b, 5c) innerhalb der Ventilstange (5) mit dem dem Verschlußteil (4a) unmittelbar benachbarten Bereich des Balginnenraumes (6) permanent verbunden ist,
• und **daß** die erste Kammer (7) über einen Zulaufkanal (3c) und die zweite Kammer (8) über einen Ablaufkanal (3d) jeweils mit der Umgebung der Ventilvorrichtung (1) verbunden sind.

12. Vorrichtung nach Anspruch 11, **dadurch gekennzeichnet, daß** die beiden Kammern (7,8) die Ventilstange (5) jeweils ringförmig und unmittelbar umschließen und über eine im Verschluß- und Führungsteil (3) angeordnete, gegen die Ventilstange (5) dichtende erste Stangendichtung (10) voneinander getrennt sind.

13. Vorrichtung nach Anspruch 11 oder 12, **dadurch gekennzeichnet, daß** in der zweiten Kammer (8) oder in dem Ablaufkanal (3d) ein das Kontrollfluid (F) auf Kontamination mit Fremdsubstanzen detektierender Sensor (12) angeordnet ist.

14. Vorrichtung nach einem der Ansprüche 11 bis 13, **dadurch gekennzeichnet, daß** der Zulauf- und der Ablaufkanal (3c,3d) mit einem gemeinsamen Reservoir für das Kontrollfluid (F) verbunden sind, und daß der Füllstand im Reservoir in den Grenzen der durch die Hubbewegung des Absperrventils bedingten Niveauänderungen überwacht wird.

15. Vorrichtung nach einem der Ansprüche 11 bis 14, **dadurch gekennzeichnet, daß** in dem Zulaufkanal (3c) ein erstes Einwegventil (13) für das in den Balginnenraum (6) eintretende Kontrollfluid (KE) und in dem Ablaufkanal (3d) ein zweites Einwegventil (14) für das aus dem Balginnenraum (6) austretende Kontrollfluid (KA) angeordnet sind.

16. Vorrichtung nach einem der Ansprüche 11 bis 14, **dadurch gekennzeichnet, daß** eine Fördereinrichtung vorgesehen ist, die jeweils unmittelbar oder mittelbar mit ihrem druckseitigen Auslaß an den Zulaufkanal (3c) und mit ihrem saugseitigen Einlaß an den Ablaufkanal (3d) angeschlossen ist.

17. Vorrichtung nach einem der Ansprüche 11 bis 16, **dadurch gekennzeichnet,**
• **daß** einer ersten Abdichtungsstelle (A1;1k,4l) eines am Balg (4b) angeordneten gehäuseseitigen Befestigungsteils (40 oder 4l) mit dem Ventilgehäuse (1a),
• in Richtung zur Umgebung der Ventilvorrichtung (1) gesehen,
• eine zweite Abdichtungsstelle (A2; 1a,9*,40 oder 4l; 1a,9*,3; 1a,9*,30) zwischen dem Ventilgehäuse (1a;1g) einerseits und
• dem Befestigungsteil (40 bzw. 4i) oder
einem mit letzterem in dichtendem Kontakt stehenden
• Verschluß- und Führungsteil (3) oder
• einem Stützkörper (30)
andererseits nachgeordnet ist, und
• **daß** zwischen der ersten und der zweiten Abdichtungsstelle (A1,A2) ein Leckagehohlraum (1h) angeordnet ist,
• der über wenigstens einen zweiten Ablaufkanal (1i) mit der zweiten Kammer (8) verbunden ist.

18. Vorrichtung nach Anspruch 17, **dadurch gekennzeichnet, daß** der Leckagehohlraum (1h) über wenigstens einen zweiten Zulaufkanal (11) mit der ersten Kammer (7) verbunden ist.

## Claims

1. A method for supervising a control fluid in the bellows interior of a valve mechanism for the treatment of fluids under aseptic conditions wherein the bellows formed as an expansion bellows or corrugated tube spans a valve rod passage through the valve box of the valve mechanism in such a way that it encircles the valve rod and is attached to a closing component of a closing member or to the valve rod, on one side, and is attached directly or indirectly to the valve box, on the other, **characterized in that** a forced flow of a control stream comprising the control fluid through the bellows interior is provided.

2. The method according to claim 1, **characterized in that**
• the opening and closing motion of a closing member is utilized for generating the control stream
• by the fact that the dilatation of the bellows interior which is provoked by the closing motion of the closing member results in the control fluid being drawn from the region surrounding the valve mechanism into the bellows interior, and
• the contraction of the bellows interior which is provoked by the opening motion in the opposite direction causes an expulsion of the control fluid from the bellows interior into the region surrounding the valve mechanism.

3. The method according to claim 1, **characterized in that** the control stream is generated by a measure not depending on the reversing motion of the valve mechanism for producing a pressure gradient in the control fluid which is required for the flow through the bellows interior.

4. The method according to any one of claims 1 to 3, **characterized in that** the flow through the bellows interior starts at a fold of the bellows adjacent to the closing component and continues up to the other end of the bellows and beyond it.

5. The method according to any one of claims 1 to 4, **characterized in that** the direction of flow of the control stream in the bellows interior and the direction of lift of the gas bubbles in a liquid control fluid have at least one common component of direction.

6. The method according to any one of claims 1 to 5, **characterized in that** a detection is made for contamination of the control fluid by foreign substances in the region of the control fluid exiting from the bellows interior.

7. The method according to any one of claims 1 to 6, **characterized in that** a visual flow inspection is made on the control stream.

8. The method according to any one of claims 1 to 7, **characterized in that** the filling level of the control fluid is supervised in the bellows interior and the systems connected thereto.

9. The method according to any one of claims 1 to 8, **characterized in that** even the sealing point of the bellows with the valve box is additionally supervised by the control stream.

10. The method according to claim 9, **characterized in that** the control stream is split up prior to flowing through the bellows, one stream portion is used for supervising the sealing point and, subsequently, this stream portion is converged with the stream portion flowing out of the bellows.

11. An apparatus for performing the method according to any one of claims 1 to 10, **characterized in that**
• two chambers separated from each other (7, 8) are provided in a closing and guide portion (3) of the shut-off valve (1) through which the valve rod is passed and led out of the valve box (1a),
• the bellows interior (6) opens into the second chamber (8) at its end facing away from the closing component (4a),
• the first chamber (7) is permanently connected, via communicating bores (5a, 5b, 5c) within the valve rod (6), to the region of the bellows interior (6) directly adjoining the closing component (4a), and that
• the first chamber is always connected to the region surrounding the valve mechanism (1) via an inflow duct (3c) and the second chamber (8) is connected to the region surrounding the valve mechanism via an outflow duct (3d).

12. The apparatus according to claim 11, **characterized in that** each of the two chambers (7, 8) encircles the valve rod (5) circularly and directly and are separated from each other via a first rod sealing (10) disposed in the closing and guide portion (3) and sealing against the valve rod (5).

13. The apparatus according to claim 11 or 12, **characterized in that** a sensor (12) detecting the control fluid (F) for contamination with foreign substances is disposed in the second chamber (8) or the outflow duct (3d).

14. The apparatus according to any one of claims 11 to 13, **characterized in that** the inflow and outflow ducts (3c, 3d) are connected to a common reservoir for the control fluid F and that the filling level in the reservoir is supervised within the limits of the level variations based on the lifting motion of the valve mechanism.

15. The apparatus according to any one of claims 11 to 14, **characterized in that** a first one-way valve (13) is disposed in the inflow duct (3c) for the control fluid (KE) entering the bellows interior (6) and a second one-way valve (14) is disposed in the outflow duct (3d) for the exiting control fluid (KA).

16. The apparatus according to any one of claims 11 to 14, **characterized in that** a conveying device is provided the pressure end outlet of which is connected directly or indirectly to the inflow duct (3c) and the suction end inlet of which is connected to the outflow duct (3d).

17. The apparatus according to any one of claims 11 to 16, **characterized in that**
• a first sealing point (A1; 1k 4l) of a box end fastening component (40 or 4l) disposed on the bellows (4b) with the valve box (1a),
• as seen towards the region surrounding the valve mechanism (1),
• is followed by a second sealing point (A2; 1a, 9*, 40 or 4l; 1a, 9*, 3; 1a, 9*, 30) between the valve box (1a; 1g), on one hand, and
• the fastening component (40 and 4i, resp.) or
• a closing and guide component (3) which is in a sealing contact with the latter, or
• a supporting body (30),
on the other, and
• that a leakage cavity (1h) is disposed between the first and second sealing points (A1, A2)
• which is connected to the second chamber (8) via at least a second outflow duct (1i).

18. The apparatus according to claim 17, **characterized in that** the leakage cavity (1h) is connected to the first chamber (7) via at least a second inflow duct (11).

## Revendications

1. Procédé pour surveiller un fluide de contrôle dans l'espace intérieur du soufflet d'un dispositif de soupape destiné à traiter des fluides dans des conditions aseptiques, suivant lequel le soufflet, formé en tant que soufflet à plis ou en tant que tube ondulé, enjambe un passage de tige de soupape à travers la cage de soupape du dispositif de soupape de telle manière qu'il entoure la tige de soupape et qu'il est fixé d'une part à une partie de fermeture d'un organe de fermeture ou à la tige de soupape et d'autre part directement ou indirectement à la cage de soupape, **caractérisé en ce que** l'on prévoit un écoulement forcé à travers l'espace intérieur du soufflet avec un courant de contrôle constitué par le fluide de contrôle.

2. Procédé selon la revendication 1 **caractérisé en ce que**
• le mouvement d'ouverture et de fermeture d'un organe de fermeture est utilisé pour générer le courant de contrôle,
• la dilatation de l'espace intérieur du soufflet provoquée par le mouvement de fermeture de l'organe de fermeture a pour effet une aspiration du fluide de contrôle depuis l'environnement du dispositif de soupape dans l'espace intérieur du soufflet et
• la contraction de l'espace intérieur du soufflet provoquée par le mouvement d'ouverture en sens contraire a pour effet une expulsion du fluide de contrôle depuis l'espace intérieur du soufflet dans l'environnement du dispositif de soupape.

3. Procédé selon la revendication 1 **caractérisé en ce que** le courant de contrôle est généré par une action indépendante du mouvement de commutation du dispositif de soupape afin de produire dans le fluide de contrôle un gradient de pression nécessaire pour l'écoulement à travers l'espace intérieur du soufflet.

4. Procédé selon l'une des revendications 1 à 3 **caractérisé en ce que** l'écoulement à travers l'espace intérieur du soufflet commence à un pli de soufflet voisin de la partie de fermeture et se prolonge jusqu'à l'autre extrémité du soufflet et au-delà.

5. Procédé selon l'une des revendications 1 à 4 **caractérisé en ce que** la direction d'écoulement du courant de contrôle dans l'espace intérieur du soufflet et la direction de sustentation des bulles de gaz dans un fluide de contrôle liquide présentent au moins une composante de direction commune.

6. Procédé selon l'une des revendications 1 à 5 **caractérisé en ce que**, dans la zone du fluide de contrôle qui sort de l'espace intérieur du soufflet, on réalise sur celui-ci une détection de la contamination avec des substances étrangères.

7. Procédé selon l'une des revendications 1 à 6 **caractérisé en ce que** l'on réalise un contrôle optique du flux du courant de contrôle.

8. Procédé selon l'une des revendications 1 à 7 **caractérisé en ce que** l'on surveille l'état de remplissage du fluide de contrôle dans l'espace intérieur du soufflet et dans les systèmes qui y sont reliés.

9. Procédé selon l'une des revendications 1 à 8 **caractérisé en ce que** de plus le point d'étanchéité du soufflet avec la cage de soupape est surveillé avec le courant de contrôle.

10. Procédé selon la revendication 9 **caractérisé en ce que** le courant de contrôle est réparti avant l'écoulement à travers le soufflet, un courant partiel est utilisé pour surveiller le point d'étanchéité puis ce courant partiel est réuni avec le courant partiel qui s'écoule du soufflet.

11. Dispositif pour réaliser le procédé selon l'une des revendications 1 à 10 **caractérisé en ce que**
• l'on prévoit deux chambres (7, 8) séparées l'une de l'autre dans une partie de fermeture et de guidage (3) de la soupape d'arrêt (1) à travers laquelle la tige de soupape est guidée et en-dehors de laquelle la cage de soupape (1a) est guidée,
• l'espace intérieur du soufflet (6) à son extrémité opposée à la partie de fermeture (4a) débouche dans la deuxième chambre (8),
• la première chambre (7) est reliée de façon permanente à la zone de l'espace intérieur du soufflet (6) directement voisine de la partie de fermeture (4a) au moyen de forures de liaison (5a, 5b, 5c) à l'intérieur de la tige de soupape (5),
• et la première chambre (7) est reliée à l'environnement du dispositif de soupape (1) au moyen d'un canal d'amenée (3c) et la deuxième chambre (8) est reliée à l'environnement du dispositif de soupape (1)au moyen d'un canal de sortie (3d).

12. Dispositif selon la revendication 11 **caractérisé en ce que** les deux chambres (7, 8) entourent respectivement annulairement et directement la tige de soupape (5) et sont séparées l'une de l'autre par une première garniture de tige (10) qui assure l'étanchéité par rapport à la tige de soupape (5) et qui est placée dans la partie de fermeture et de guidage (3).

13. Dispositif selon la revendication 11 ou 12 **caractérisé en ce qu'**un capteur (12) qui détecte si le fluide de contrôle (F) est contaminé avec des substances étrangères est placé dans la deuxième chambre (8) ou dans le canal de sortie (3d).

14. Dispositif selon l'une des revendications 11 à 13 **caractérisé en ce que** le canal d'amenée et le canal de sortie (3c, 3d) sont reliés à un réservoir commun pour le fluide de contrôle (F) et que l'état de remplissage dans le réservoir est contrôlé dans les limites des modifications de niveau déterminées par le mouvement d'élévation de la soupape d'arrêt.

15. Dispositif selon l'une des revendications 11 à 14 **caractérisé en ce que** dans le canal d'amenée (3c) est placée une première soupape à une voie (13) pour le fluide de contrôle (KE) qui entre dans l'espace intérieur du soufflet (6) et dans le canal de sortie (3d) une deuxième soupape à une voie (14) pour le fluide de contrôle (KA) qui sort de l'espace intérieur du soufflet (6).

16. Dispositif selon l'une des revendications 11 à 14 **caractérisé en ce que** l'on prévoit une installation de transport qui respectivement directement ou indirectement est raccordée au canal d'amenée (3c) avec sa décharge du côté refoulement et au canal de sortie (3d) avec son admission du côté aspiration.

17. Dispositif selon l'une des revendications 11 à 16 **caractérisé en ce que**
• en aval d'un premier point d'étanchéité (A1 ; 1k, 4l) d'une partie de fixation (40 ou 4l) - côté boîtier placée sur le soufflet (4b) - avec la cage de soupape (1a)
• en direction de l'environnement du dispositif de soupape (1)
• est placé un deuxième point d'étanchéité (A2 ; 1a, 9*, 40 ou 4l; 1a, 9*, 3 ; 1a, 9*, 30) entre la cage de soupape (1a ; 1g) d'une part et
• la partie de fixation (40 ou 41) ou
• une partie de fermeture et de guidage (3) en contact jointif avec celle-ci ou
• un corps d'appui (30) d'autre part
• et **en ce que**, entre le premier et le deuxième point d'étanchéité (A1, A2), est placé un espace creux de fuite (1h)
• qui est lié à la deuxième chambre (8) par au moins un deuxième canal de sortie (1i).

18. Dispositif selon la revendication 17 **caractérisé en ce que** l'espace creux de fuite (1h) est relié à la première chambre (7) par au moins un deuxième canal d'amenée (11).
